# EUROPEAN PATENT SPECIFICATION

(11) **EP 4 533 399 B1**
(45) Date of publication and mention of the grant of the patent: **30.09.2026**
(21) Application number: 23728416.1
(22) Date of filing: 24.05.2023
(51) Int. Cl.: G06T 11/10

(54) **SIMULATING FOUNDATION MAKEUP EFFECT IN AUGMENTED IMAGES**
SIMULATION DES GRUNDAUFBAUEFFEKTS IN ERWEITERTEN BILDERN
SIMULATION D'EFFET DE MAQUILLAGE DE FOND DE TEINT DANS DES IMAGES AUGMENTÉES

(30) Priority: 26.05.2022 GB 202207730
(43) Date of publication of application: 09.04.2025
(73) Proprietor: Holition Limited, London EC1N 6RY (GB)
(72) Inventor: FREEMAN, Russell, London Greater London EC1N 2PL (GB); CICIANI, Lorenzo, London Greater London EC1N 2PL (GB); MALLAH, Charles, London Greater London EC1N 2PL (GB)
(74) Representative: Cross, James Peter Archibald
(86) International application number: PCT/GB2023/051360
(87) International publication number: WO 2023/227886

(56) References cited:
- BRUNO EVANGELISTA ET AL: "Realistic AR makeup over diverse skin tones on mobile", 20181204; 1077952576 - 1077952576, 4 December 2018 (2018-12-04), pages 1 - 2, XP058423010, ISBN: 978-1-4503-6063-0, DOI: 10.1145/3283289.3283313
- CHENG-GUO HUANG ET AL: "Physically based cosmetic rendering", COMPUTER ANIMATION AND VIRTUAL WORLDS, JOHN WILEY & SONS LTD, GB, vol. 24, 13 May 2013 (2013-05-13), pages 275 - 283, XP072311534, ISSN: 1546-4261, DOI: 10.1002/CAV.1523
- LI CHEN ET AL: "Physically-Based Simulation of Cosmetics via Intrinsic Image Decomposition with Facial Priors", IEEE TRANSACTIONS ON PATTERN ANALYSIS AND MACHINE INTELLIGENCE, IEEE COMPUTER SOCIETY, USA, vol. 41, no. 6, 1 June 2019 (2019-06-01), pages 1455 - 1469, XP011722551, ISSN: 0162-8828, [retrieved on 20190503], DOI: 10.1109/TPAMI.2018.2832059
- ANONYMOUS: "Unsharp masking", 27 December 2021 (2021-12-27), XP093066126, Retrieved from the Internet <URL:https%3A%2F%2Fen.wikipedia.org%2Fw%2Findex.php%3Ftitle%3DUnsharp_masking%26oldid%3D1062332852> [retrieved on 20230721]

## Description

### Field of the Invention

This invention relates to image processing systems and methods, and more particularly to techniques for generating augmented image data with a simulated foundation makeup effect.

### Background of the Invention

Choosing new cosmetic products is often a tedious and time consuming process, and is only usually possible in a retail environment where samples are made available. An important consideration for a customer trying on new makeup products is seeing how it looks as they move around, taking momentary opportunity to view themselves wearing the cosmetic from particular angles or with particular expressions.

Utilising the mass availability of handheld, or other, computing devices to make real-time virtual try-on of new cosmetics possible in any environment is already changing the way the customer browses and selects from a product catalogue. As such systems become prevalent, there continue to be technical challenges, such as improving accuracy and efficiency in locating features of a subject in a live captured image data stream, as well as accuracy and photo-realism in the rendering of virtual cosmetic products over the live captured images, in order to output the augmented image data in real-time with little or no noticeable latency, particularly on devices having limited hardware capabilities. The layering of a base foundation makeup product followed by additional layers of other makeup products adds further computational complexities.

"Realistic AR Makeup over Diverse Skin Tones on Mobile" (Evangelista, B. et al., 2018) discloses an approach to the application of realistic makeup over a diverse range of skin tones in mobile phones using augmented reality.

"Physically based cosmetic rendering" (Huang, C. et al., 2013) discloses simulating the realistic rendering effect of human skin with cosmetics applied.

"Physically-Based Simulation of Cosmetics via Intrinsic Image Decomposition with Facial Priors" (Li, C. et al., 2019) discloses a method for makeup simulation by decomposing the target image into image layers that are differently affected by cosmetics and transforming these layers into their makeup equivalents using physically-based reflectance models.

What is desired are real-time augmentation systems that address at least some of the above technical challenges, and thereby to provide a better user experience.

### Statements of the Invention

Aspects of the present invention are set out in the accompanying claims.

In one aspect, the present invention provides a computer-implemented method of generating augmented image data with a simulated foundation makeup effect, by receiving source image data including at least one region of skin pixels; generating augmented image data based on augmentation parameters associated with the foundation makeup including one or more appearance parameters and one or more colourisation parameters, and outputting the augmented image data to a display. Augmented image data is generated by: generating modified image data by processing the captured image data to highlight skin detail features based on one or more of the appearance parameters; computing optical components of the modified image data; computing optical components of the foundation makeup based on one or more of said augmentation parameters; and rendering augmented image data by combining the foundation makeup optical components and the modified image optical components.

The captured image data may be processed to highlight skin detail features by: generating a detail layer by blurring the captured image data at a first granularity and computing a difference between the captured image data and the blurred image; computing a base layer by blurring the captured image data at a second granularity that is larger than the first granularity; and blending the detail and base layers. The detail and base layers may be blended by, for each pixel of the blended layer, modifying a contrast property of the pixel based on one or more of the retrieved appearance parameters.

The blurring may comprise applying a Gaussian blurring with the defined granularity, wherein the granularity defines a width of pixels sampled from the captured image data as input to a Gaussian blurring function. A scale of the granularity may be computed based on the resolution of the captured image data.

The detail layer may be generated based on scale and/or offset values of the computed difference that control the level of highlighting. The detail and base layers may be computed from luma components of the captured image data. Blending the detail and base layers may further comprise applying a respective blend mode to increase or decrease brightness of the luma component of each base layer pixel, based on the pixel value of the corresponding blended layer pixel.

The optical components include decomposed frequency spectrum components. Augmented image data is further be generated by: computing an estimation of one or more of said colourisation parameters as applied to a different background property; computing an estimation of pixel values from the modified image data under a different lighting condition; computing spectral absorption and scattering components of the estimated versions of the colourisation parameters and the modified image data; computing spectral reflectance and transmittance components of the colourisation parameters from the spectral absorption and scattering components of the colourisation parameters and the estimated version; and computing spectral reflectance and transmittance components of the modified image data from the spectral absorption and scattering components of the modified image data and the estimated version.

Spectral reflectance and transmittance components of a composite layer of colourisation parameters over the captured image data may be computed by combining the respective computed spectral reflectance and transmittance components of the colourisation parameters and the modified image data.

The colourisation parameters may comprise values defined to simulate appearance of the foundation product as applied under a bright lighting condition, and the estimated version may comprise computed values to simulate appearance of the foundation product as applied under a dark lighting condition. The modified image data may comprise pixel values captured under a bright lighting condition, and the estimated version may comprise computed pixel values under a dark lighting condition.

The appearance parameters may include a thickness parameter defining simulated thickness of the foundation makeup. The appearance parameters may further include one or more additional simulated appearance properties, including a gloss or matte property, highlight, glitter, lighting adjustment, blend colour, and alpha blend.

The optical components of the foundation makeup may be computed based on one or more of said colourisation parameters and one or more of said appearance parameters. The colourisation parameters may be defined by values of a colour in a defined colour space, pixel values of a texture image, or by a mathematical model to generate an array of augmentation values.

A user interface may be output to the display, and operable to receive user input selection of the foundation makeup product and one or more associated appearance parameters. User input selection of one or more additional makeup products may further be received via the user interface. Augmentation parameters associated with the selected one or more additional makeup products may be retrieved, and the modified image data may be further augmented by applying colourisation to the pixel values based on the retrieved augmentation parameters of the additional makeup products.

In further aspects, the present invention provides a system comprising means for performing the above methods. In yet other aspects, there is provided a computer program arranged to carry out the above methods when executed by a programmable device or computer system.

### Brief Description of the Drawings

There now follows, by way of example only, a detailed description of embodiments of the present invention, with references to the figures identified below.
Figure 1 is a block diagram showing the main components of an augmented reality system according to an embodiment of the invention.
Figure 2 is a flow diagram illustrating the main processing steps performed by the system of Figure 1 to generate augmented images with a simulated foundation makeup product effect, according to an embodiment.
Figure 3 is a block flow diagram schematically illustrating in greater detail exemplary image processing steps performed by the skin detail highlighter in Figure 1 to highlight skin detail features in source images.
Figure 4 schematically illustrates a worked example of image data that is processed and generated according to the process shown in Figure 3.
Figure 5 is a block flow diagram schematically illustrating exemplary image processing steps performed by the appearance modifier in Figure 1 to further modify pixel values of the modified image data based on retrieved appearance parameters of a foundation makeup product.
Figure 6, which comprises Figures 6A to 6C, schematically illustrates a worked example of image data that is processed and generated according to the process shown in Figure 5.
Figure 7 is a diagram of an example of a computer system on which one or more of the functions of the embodiment may be implemented.

### Detailed Description

### System Overview

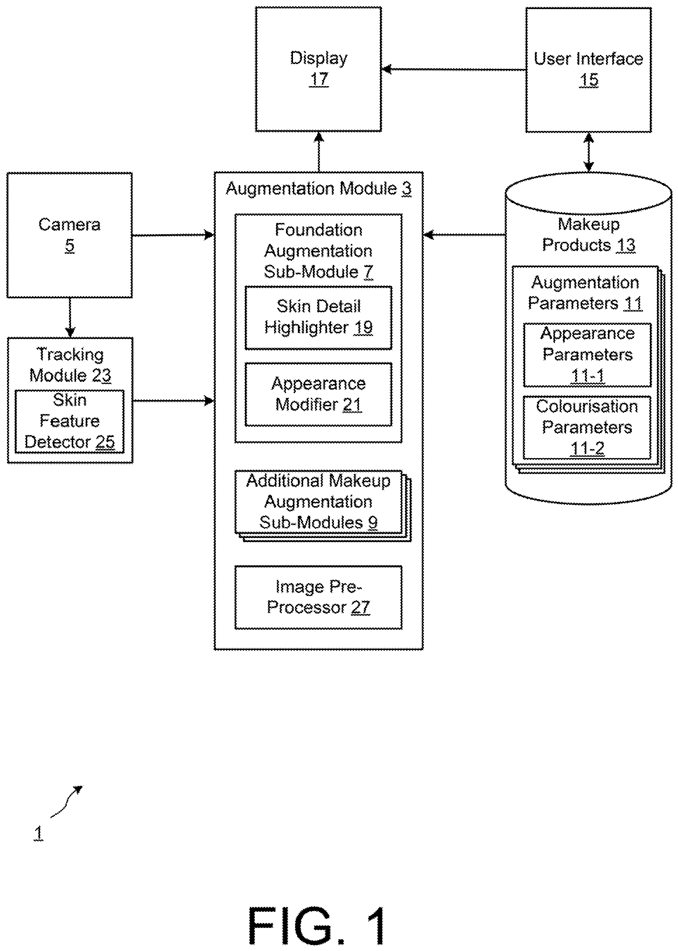

Figure 1 schematically illustrates an exemplary augmented reality system 1 in which embodiments described herein for virtual application of makeup effects to captured images may be implemented. As shown, the system 1 includes an image augmentation module 3 configured to automatically process source image data, for example received from a camera 5, using one or more augmentation sub-modules 7,9 to render or apply simulated colourisation to the pixels of the source image data. Each augmentation sub-module 7,9 is configured to apply one or more image processing filters to input image data, and to output augmented image data that simulates the application of a corresponding makeup product as a visual effect. In the present exemplary embodiments, a foundation augmentation sub-module 7 is configured to simulate the visible appearance of a foundation makeup product applied as a base layer to detected skin regions in a captured image. The augmentation module 3 may also simulate, via respective additional makeup product augmentation sub-modules 9, the visible appearance of applying one or more additional layers of other makeup products, such as blush, eye liner, eyeshadow, eyeliner, mascara, lipstick, lip gloss, lip liner, or the like, over the base layer of the foundation make-up product.

Each augmentation sub-module 7,9 is configured to modify pixel values of received input image data based on augmentation parameters 11 that dictate how the underlying filters for the simulated effect are applied and layered. Each set of augmentation parameters 11 may correspond to a respective one of a plurality of makeup products defined in a memory 13, such as a makeup product library or database. The memory 13 may also store metadata associated with each one of the plurality of makeup products, such as images and information of the respective products. The augmentation parameters 11 may be retrieved from the memory 13 in response to receiving user selection of one or more makeup products via a user interface 15. The augmentation module 3 may be configured to control the flow of augmented image data through a sequence of product augmentation sub-modules 7,9 to render or produce a composite image. For example, the respective augmentation sub-modules 7,9, and the sequence for augmenting the image data, may be determined based on the user selection of makeup products. The augmentation module 3 outputs the augmented image data, for example the final composite image, to a display 17.

In the exemplary embodiments, the foundation augmentation sub-module 7 is configured to generate augmented image data based on augmentation parameters associated with a foundation makeup product, including one or more appearance parameters and one or more colourisation parameters. As will be described in greater detail below, the foundation augmentation sub-module 7 includes a skin detail highlighter 19 to compute modified image data by automatically processing the captured image data to highlight skin detail features based on the retrieved augmentation parameters, using the appearance parameters 11-1 to control the initial process of highlighting skin detail features based on the appearance parameters 11-1. The foundation augmentation sub-module 7 also includes an appearance modifier 21 to further modify pixel values of the modified image data based on the retrieved augmentation parameters. For example, the appearance modifier 21 may use the appearance parameters 11-1 and the colourisation parameters 11-2 to control the subsequent process of applying simulated colourisation to pixel values of the modified image.

The augmentation parameters 11 may include data defining appearance parameters 11-1 and colourisation parameters 11-2 of each makeup product in the memory 13. Appearance parameters 11-1 may include one or more of a simulated product application thickness 11-1a, and a simulated appearance property 11-1b such as gloss or matte, highlight, glitter, lighting adjustment, blend colour, alpha blend, and the like. Colourisation parameters 11-2 may include a colour value in a defined colour space, pixel values of a texture image defining colours and patterns of the applied product, or may be defined by parameters of a mathematical model to generate an array of augmentation values. Additionally or alternatively, one or more of the augmentation parameters may be set or defined by the user via the user interface 15, for example to dynamically adjust control parameters of the simulated application of a makeup product in the augmented image. For example, the foundation augmentation sub-module 7 may be configured to augment captured image data based on user input defining the simulated application thickness parameter 11-1a of a selected foundation makeup product.

Advantageously, the foundation augmentation sub-module 7 provides improved simulation of an applied foundation makeup product by simulating physical properties of the application of the product to the underlying skin details before simulating the colourisation effects, in a way that is both predictable and controllable, with efficient utilisation of memory and processing resources.

The augmented reality system 1 may also include a tracking module 23 configured to automatically process the captured image data to detect and determine the location of one or more predefined objects and/or features in a captured scene. For example, the tracking module 3 may be configured to locate and track a face object as described in the applicant's earlier GB2516739. Alternatively or additionally, the tracking module 23 may include a skin feature detector 25 to automatically determine one or more regions of skin-coloured pixels in the captured image, and to output binary mask data identifying the determined locations of skin pixels in the captured image data. The skin region binary mask data may be used by the foundation augmentation sub-module 7 to control the application area of the foundation makeup product in the captured image. It is appreciated that the skin feature detector 25 may detect skin regions in a source image using various methods known in the art. It should also be appreciated that the techniques described herein may be applicable to detected skin pixels of non-facial features, for example in an implementation context of virtual application of makeup effects to other regions of a user's body. The tracking module 23 may also be configured to transmit the captured image data from the camera 5 to the augmentation module 3 for processing.

Augmentation module 3 may also include an image pre-processing module 27 configured to pre-process input image data, and to output the pre-processed image data for subsequent processing by one or more of the product augmentation sub-modules 7,9. For example, the image pre-processing module 27 may be configured to convert input image data from one colour space to another colour space,. In the worked examples described below, the skin detail highlighter 19 is configured to decompose the captured image data into colour components represented by the proportion of incident light that is reflected away from skin at each pixel location, and diffuse components represented by the specular reflection at each pixel location. Accordingly, the image pre-processing module 27 is configured to convert source image data from a RGB (Red, Green, Blue) based colour space, as typically output by a camera 5, to a luma and chroma component based colour space such as Y'CbCr, and vice versa. In this way, the chroma component(s) of the converted image data include the decomposed skin colour components, while the luma component of the converted image data includes the decomposed skin diffuse components. As those skilled in the art will appreciate, the processing components of the system 1 may be configured to perform processing of image data in other suitable colour spaces that define a luma component (also referred to as luminance or brightness component, depending on the implemented colour space).

The augmented reality system 1 may be implemented by any suitable computing device of a type that is known *per se,* such as a desktop computer, laptop computer, a tablet computer, a smartphone such as an iOS^{™}, Blackberry^{™} or Android^{™} based smartphone, a 'feature' phone, a personal digital assistant (PDA), or any processor-powered device with suitable user input, camera and display means. The camera 5 may be a conventional digital camera including one or more optical sensors, such as charge-coupled devices (CCD), complementary metal-oxide semiconductor (CMOS) phototransistors, and the like, for conversion of captured light into digital image data. Additionally or alternatively, the display 15 may be embodied as a separate computing device, such as a mobile phone, tablet PC, laptop, etc. in communication with a remote host device embodying the augmentation module 3, via a data network (not shown), for example a terrestrial cellular network such as a 2G, 3G, 4G or 5G network, a private or public wireless network such as a WiFi^{™}-based network and/or a mobile satellite network or the Internet.

### Image Augmentation Process

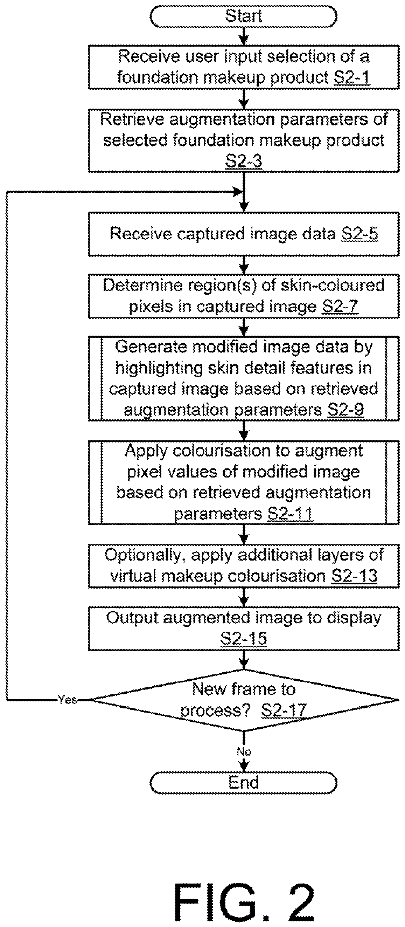

Figure 2 is a flow diagram illustrating a computer-implemented process to generate augmented images with a simulated foundation makeup product effect, performed by components of the augmented reality system 1, according to an exemplary embodiment of the present invention. As shown, the process may start at step S2-1, where the system 1 receives user input selection via user interface 15 of one or more makeup products to be applied as virtual makeup to a source image. In the present exemplary embodiment, at least one of the selected products is a foundation makeup product to be applied as a base layer of virtual makeup, to image data captured by the camera 5. The system 1 may retrieve metadata associated with a plurality of makeup products from the memory 13, and output the metadata as UI elements of the user interface 15 for the user to browse and select. The user interface 15 may display the UI elements over live captured image frames from the camera 5.

At step S2-3, the system 1 retrieves augmentation parameters 11 associated with the selected foundation makeup product, from the memory 13. For example, the augmentation module 3 may retrieve appearance parameters 11-1, such as gloss or matte simulated appearance modifiers, and colourisation parameters 11-2, such as a simulated application colour, defined for the selected foundation makeup product in the product library or database. Alternatively or additionally, the augmentation module 3 may receive user input of one or more appearance parameter values 11-1 of the selected foundation makeup product, such as the simulated application thickness parameter value 11-1a, via the user interface 15.

In the present exemplary embodiment, the tracking module 23 receives, or retrieves, image data from the camera 5 at step S2-5. The received image data may be an image in a sequence of images or video frames captured by the camera 5. At step S2-7, the skin feature detector 25 of the tracking module 23 performs image processing to automatically determine one or more regions of skin-coloured pixels in the captured image. For example, the skin feature detector 25 may generate a binary mask that defines the determined locations of skin pixels in the corresponding captured image data. The skin region binary mask data may be provided to the foundation augmentation sub-module 7 to control the application area of the simulated foundation makeup product in the captured image, as will be described below. As those skilled in the art will appreciate, in an alternative embodiment, the tracking module 3 may be configured to automatically determine an application area of the, or each, makeup product as described in the applicant's earlier WO2015/015173.

The augmentation module 3 receives, or retrieves, the captured image data from camera 5 or tracking module 23, and generates augmented image data including simulated application of the selected foundation makeup product as a base layer on skin pixels in the captured image. The foundation augmentation sub-module 7 computes modified image data at step S2-9, by automatically processing the captured image data to highlight skin detail features based on the appearance parameters 11-1 associated with the selected foundation makeup product. As will be described in more detail below, the skin detail highlighter 19 of the foundation augmentation sub-module 7 performs image processing on the received image data to highlight skin detail features by computing a detail layer from the captured image data that is blurred at a first granularity in order to identify and enhance skin details using spectrum frequency decomposition. The skin detail highlighter 19 also computes a base layer by blurring the captured image data at a second granularity that is larger than the first granularity. Subsequently, the skin detail highlighter 19 blends the enhanced detail layer and base layer to generate the modified image data that highlights skin detail features. The blend operation is controlled based on one or more appearance parameters 11-1 to improve the overall simulated effect. In this way, the skin detail highlighter 21 is configured to efficiently and effectively highlight skin detail features that are consistent across source image data of different resolutions.

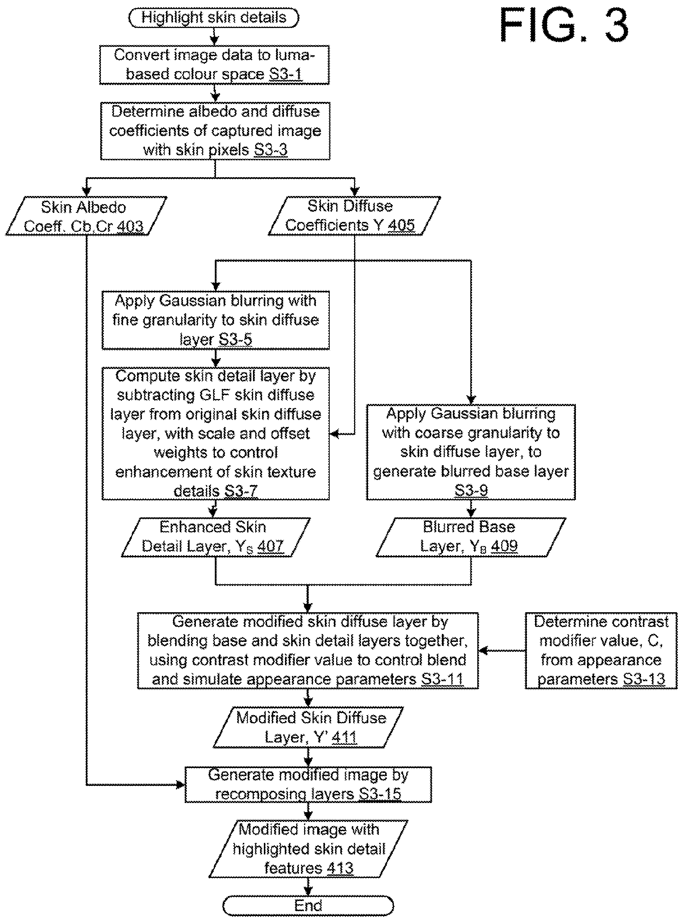

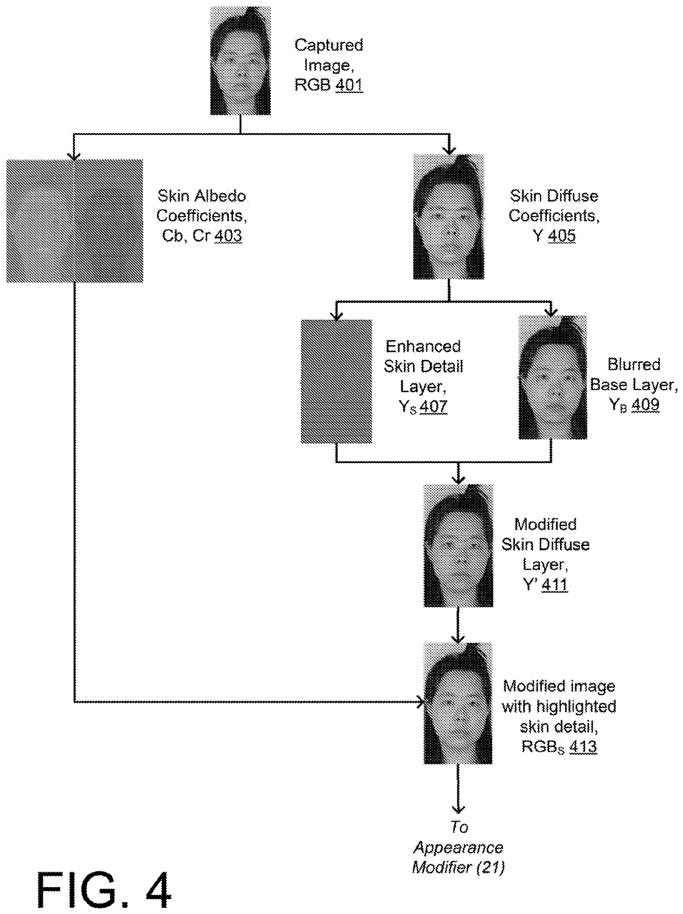

Figure 3 is a block flow diagram schematically illustrating in greater detail exemplary image processing steps performed by the skin detail highlighter 19, and associated data elements, to highlight skin detail features in source images that may have varying pixel resolutions, according to the present embodiment. Reference is also made to Figure 4 schematically illustrating a worked example of image data that is processed and generated by the skin detail highlighter 19. As shown in Figure 3, at step S3-1, the skin detail highlighter 19 may use the image pre-processor 27 to convert pixel values of the captured image data from a source, non-luma-based colour space to a luma-based colour space. In the present worked example, the captured image data 401 is converted from the RGB to Y'CbCr colour space, for example using a defined mathematical coordinate transformation.

At step S3-3, the skin detail highlighter 19 decomposes the captured image into component layers of the captured image data 401, a first layer consisting of skin albedo coefficients 403 and a second layer consisting of skin diffuse coefficients 405. As those skilled in the art will appreciate, the skin albedo coefficients 403 represent the proportion of incident light that is reflected away from skin at each skin-coloured pixel location in the source image, while the skin diffuse coefficients 405 represent the specular reflection at each pixel location. In the present exemplary embodiment, the layers of skin albedo coefficients 403 are defined by the skin chroma components, Cb and Cr, of the captured image, and the layer of skin diffuse coefficients 405 is defined by the luma component, Y, of the captured image.

At step S3-5, the skin detail highlighter 19 performs a first blurring operation on the skin diffuse coefficients layer 405, at a fine granularity. In the present exemplary embodiment, the skin detail highlighter 19 applies a Gaussian Linear Filter (GLF) with relatively small granularity to the skin diffuse coefficients layer 405, to achieve a fine level of Gaussian smoothing to the skin details in the captured image. As those skilled in the art will appreciate, the predefined granularity parameter value may be input to a blurring function to define the width of pixels sampled from the captured image data. Alternative blurring algorithms may be suitable for runtime usage, such as a box blur although this option may produce a more irregular outcome.

At step S3-7, the skin detail highlighter 19 computes a skin detail layer (Y_{S}) by subtracting the Gaussian blurred skin diffuse layer from the original skin diffuse coefficients layer 405. The skin detail highlighter 19 may be configured to apply scale and offset weights to control the enhancement or highlighting of details of the skin texture in the captured image. For example, customisable control weights may be implemented for computing spectrum frequency decomposition, where the frequency separation is efficiently computed by the subtraction operation, with enhancement of the skin details controlled by adjustment of predefined offset and scale values. At step S3-9, the skin detail highlighter 19 generates a blurred base layer (Y_{B}) 409 by performing a second blurring operation on the skin diffuse coefficients layer 405, at a coarse granularity. The skin detail highlighter 19 applies the GLF with a large granularity, relative to the small granularity applied at step S3-5, to achieve a coarse level of Gaussian smoothing to the skin details in the captured image.

At step S3-11, the skin detail highlighter 19 generates a modified skin diffuse layer (Y') 411 from the enhanced skin detail layer (Y_{S}) and the blurred base layer (Y_{B}) 409. In the present embodiment, the skin detail highlighter 19 computes output values of the modified skin diffuse layer 411 by applying a blending operation to corresponding pixels from the enhanced skin detail layer 411 and the blurred base layer 409. For example, the detail and base layers may be blended together using a linear light methodology, to apply a respective blend mode (such as a linear burn or a linear dodge blend mode) to increase or decrease brightness of the luma component of each base layer pixel, based on the pixel value of the corresponding blended layer pixel.

In the present exemplary embodiment, the skin detail highlighter 19 is configured to compute pixel values of the modified skin diffuse layer (Y') 411 further based on one or more of the retrieved appearance parameters 11-1. As shown, the blending operation applied at step S3-11 may be controlled by a contrast modifier (C), having a value determined by the skin detail highlighter 19 at step S3-13 from the retrieved appearance parameters 11-1. For example, the blending operation may be adapted to modify the contrast of the luma component of the enhanced skin detail layer (Y_{S}) pixels based on the matte/glossy appearance characteristic and/or the simulated application thickness of the selected foundation product. In the present example implementation, the contrast modifier value may be computed as: $C = clamp \left(\left(\left({p}_{g}∗0.4\right)-0.2\right)∗{p}_{t}\right) ,$ where *pₜ* is the product application thickness parameter 11-1a value, for example in the range [0,1], *p_{g}* is a glossiness/matte appearance parameter 11-1b value in the range [0,1], and $clamp \left(x\right) = max \left(0,min\left(x, M\right)\right)$ where M is the maximum pixel value in the working colour space.

In this way, the skin detail highlighter 19 may be configured to determine and use a dynamic parameter to control the blending operation, for example by calculating the modified skin diffuse layer 411 pixel values as $Y ′ \left(x\right) = blendOperation \left({Y}_{S}\left(x\right), {Y}_{B}\left(x\right), C\right)$ where *Y_{S}(x)* is the pixel value from the enhanced skin detail layer 407, Y*_{B}(x)* is the pixel value from the blurred base layer 409, and C is the determined contrast modifier value. Advantageously, the resulting output image enables more accurate simulation of the applied foundation product, by pre-processing the source image to enhance skin texture details according to the associated appearance parameters 11-1 prior to a subsequent application of the simulated colourisation.

At step S3-15, the skin detail highlighter 19 generates and outputs a modified image with highlighted skin detail features 413, based on the modified skin diffuse layer 411. For example, the skin detail highlighter 19 in this exemplary embodiment is configured to generate the modified image 413 by recomposing the modified luma components (Y') of the modified skin diffuse layer 411 from step S3-11 and the corresponding chroma components (Cb,Cr) of the skin albedo coefficients layer 403 from step S3-3. The recomposed image data may be converted back to the RGB colour space, for example using the image pre-processor 27.

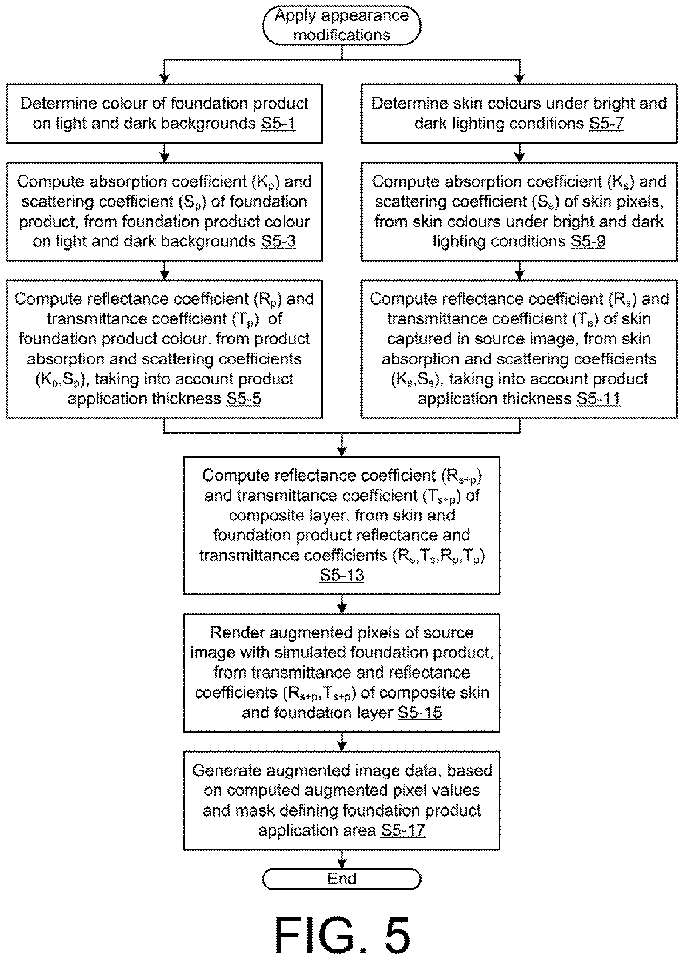

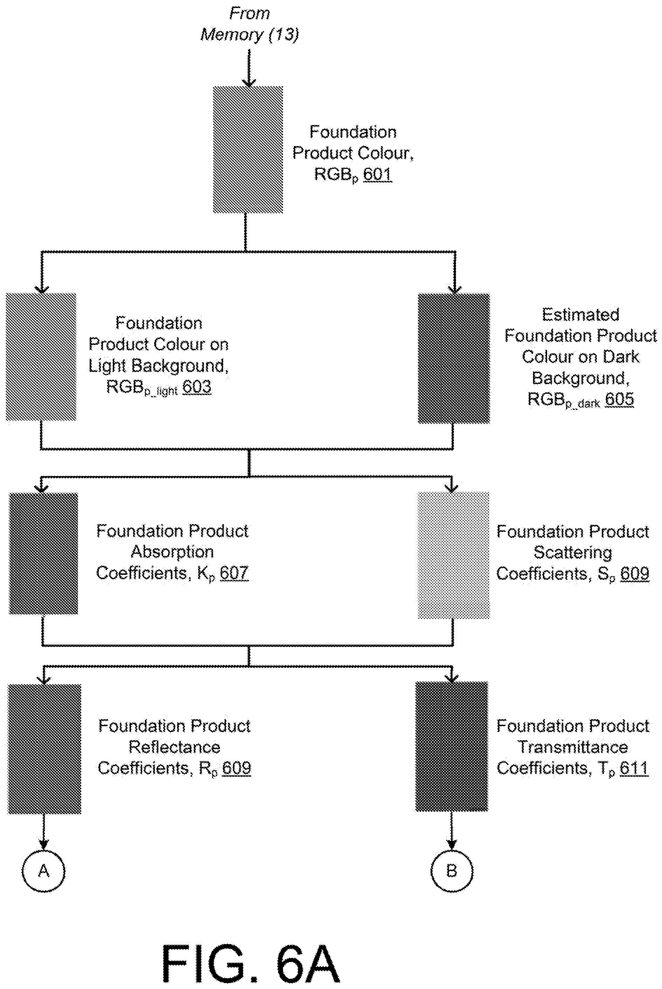

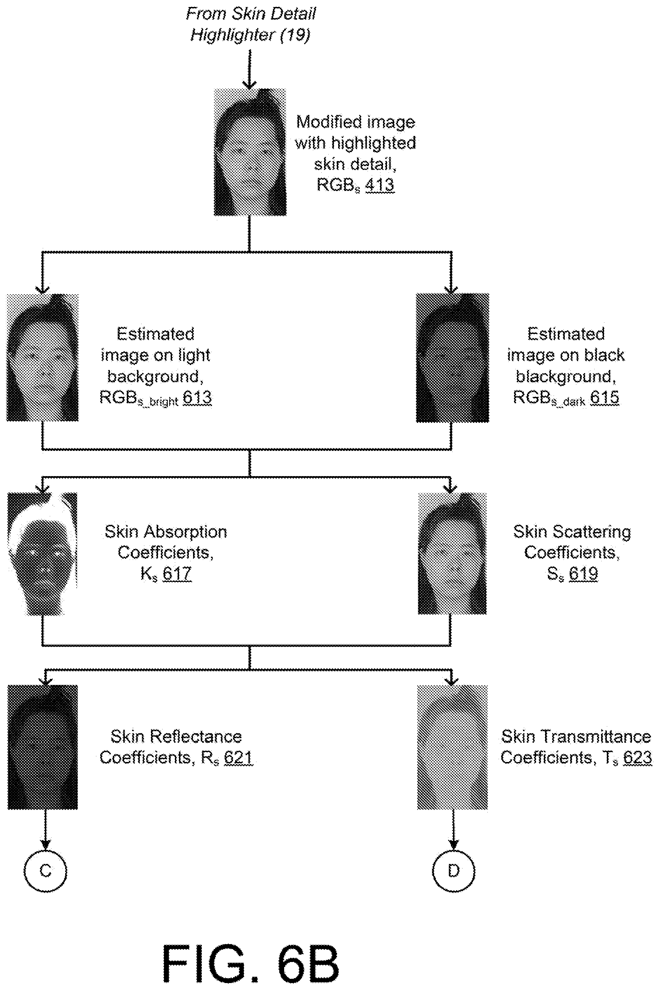

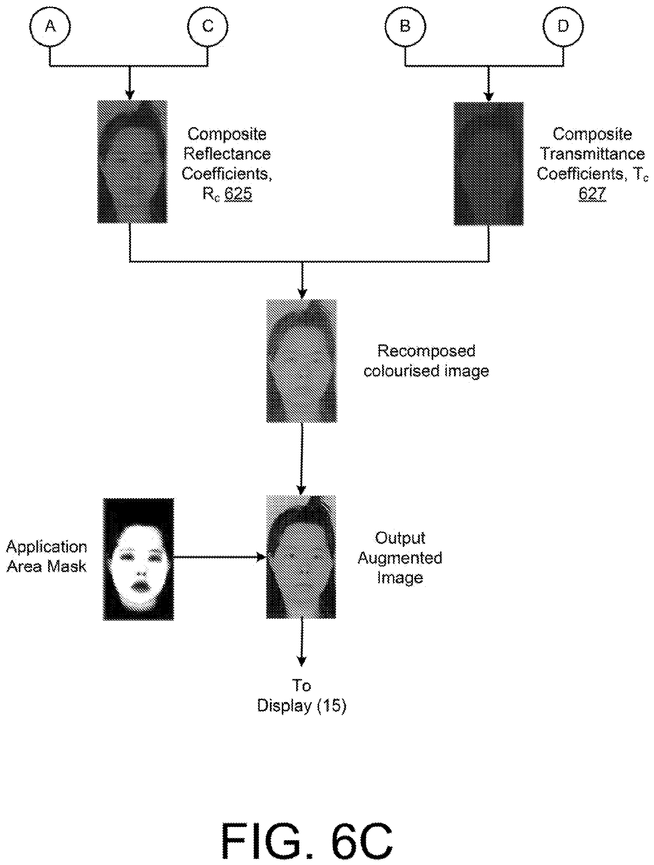

Returning to Figure 2, at step S2-11, the appearance modifier 21 of the foundation augmentation sub-module 7 applies a subsequent image augmentation process to the modified image with highlighted skin detail features 413 output by the skin detail highlighter 19. Figure 5 is a block flow diagram schematically illustrating in greater detail exemplary image processing steps performed by the appearance modifier 21, and associated data elements, to further modify pixel values of the modified image data 413 based on the retrieved augmentation parameters 11 of the selected foundation product. Reference is also made to Figure 6, which comprises Figures 6A to 6C, schematically illustrating a worked example of image data that is processed and generated by appearance modifier 21 of the foundation augmentation sub-module 7.

Figure 5 shows a method wherein the appearance modifier 21 performs decomposition of the modified image with highlighted skin detail features 413, as well as the colourisation parameters 11-2 of the selected foundation product, into optical component of each layer that are combined and recomposed to generate the resulting augmented image. In the present embodiment, the optical components are defined by coefficients of the Kubelka-Munk (K-M) model, which describes the optical behaviour of materials in terms of the radiant energy that is absorbed and scattered. More specifically, the K-M model defines equations to describe reflectance, R, and transmittance, T, in terms of an absorption coefficient, K, and a scattering coefficient, S.

Accordingly, at step S5-1, the appearance modifier 21 determines, based on the retrieved colourisation parameters 11-2, the respective colours 603 of the selected foundation product as visible when applied over a light background, and when applied over a dark background. For example, the colourisation parameters 11-2 of the selected foundation product may define the product colour (RGBₚ) as a colour swatch in the RGB colour space, where the values are tuned to define the simulated appearance of the foundation product as applied on a light (e.g. white) background. Using the defined product colour 601 as the product colour on a light background (RGB_{p_light}) 603a, the appearance modifier 21 may estimate the product colour on a black background (RGB_{p_dark}) 603b, based on a foundation colour curve model. The colour curve model may be predefined based on measurements of foundation product applied on light and dark backgrounds. As those skilled in the art will appreciate, a colour curve model computed from product colour tuned on a dark background may be used to estimate product colour on a light background.

In the present example implementation, the foundation product colour on a black background 603b is estimated, as: ${RGB}_{p _ dark} \left(x\right) = {RBG}_{p _ light} \left(x\right) \left(0.3+\left({C}_{μ}\left(x\right)+0.6\right)\right)$ where *RGB_{p_light}*(*x*) is the product colour 603a at pixel location x of the swatch defined in the RGB colour space. *C_{µ}*(*x*) is the inverted arithmetic mean of the product colour of the corresponding pixel location, computed as: ${C}_{μ} \left(x\right) = M - \left(\frac{{R}_{p _ light} \left(x\right) + {G}_{p _ light} \left(x\right) + {B}_{p _ light} \left(x\right)}{3}\right)$ where *R_{p_light}*(*x*), *R_{p_light}*(*x*), and *R_{p_light}*(*x*) are the corresponding red, green and blue components, respectively, of the estimated product colour on a light background 603a, and *M* is the maximum pixel value in the working RGB colour space, as defined above.

At step S5-3, the appearance modifier 21 computes the absorption coefficients (Kₚ) 605 and scattering coefficients (Sₚ) 607 of the foundation product colour, based on the determined foundation product colour on light and dark backgrounds 603a,b from step S5-1. The foundation product absorption coefficients 605 and scattering coefficients 607 represent optical characteristics of the simulated applied layer of foundation product, in terms of propagation of light through the medium. The absorption coefficients 605 and scattering coefficients 607 may be computed at each pixel location x of the defined swatch for the product. In the present example implementation, the foundation product absorption coefficients (Kₚ) 605 and scattering coefficients (Sₚ) 607 are calculated based on an approximation discussed for example in *"Computer-Generated Watercolor"* by Curtis, Andersen, et al (hereinafter the Curtis-Andersen approximation), as: ${S}_{p} = \frac{1}{b} {coth}^{- 1} \left(\frac{{b}^{2} - \left(a-{RGB}_{p _ light}\right) \left(a-1\right)}{b \left(1-{RGB}_{p _ light}\right)}\right)$ and ${K}_{p} = {S}_{p} \left(a-1\right) ,$ where $a = \frac{1}{2} \left({RGB}_{p _ light}+\frac{{RGB}_{p _ dark} - {RGB}_{p _ light} + 1}{{RGB}_{p _ dark}}\right) , b = \sqrt{{a}^{2} - 1}$ As those skilled in the art will appreciate, the absorption coefficients 605 and scattering coefficients 607 may be computed as multichannel values in the working colour space, such as red, green and blue values. As those skilled in the art will appreciate, other suitable approximations may be implemented to calculate or approximate the K-M coefficients.

At step S5-5, the appearance modifier 21 computes the reflectance coefficient (Rₚ) 609 and transmittance coefficient (Tₚ) 611 of the foundation product, based on the foundation product absorption coefficient (Kₚ) 605 and scattering coefficient (Sₚ) 607 from step S5-3, and the product application thickness parameter (tₚ) 11-1a from step S2-3. The reflectance and transmittance coefficients 609,611 of the foundation product may also be computed at each pixel location x of the defined swatch for the product. In the present embodiment, the product application thickness parameter (tₚ) 11-1a is used to directly modify the decomposed optical components of the foundation product, enabling more accurate simulation of the applied product thickness in the resulting re-composition of optical components of the simulated makeup, skin highlight and base skin layers.

In the present example implementation, the foundation product reflectance coefficients 609 and transmission coefficients 611 are calculated, based for example on the Curtis-Andersen approximation, as: ${R}_{p} = \frac{sinh {bS}_{p} {thickness}_{p}}{a sinh \left({bS}_{p}{thickness}_{p}\right) + b sinh \left({bS}_{p}{thickness}_{p}\right)}$ ${T}_{p} = \frac{b}{a sinh \left({bS}_{p}{thickness}_{p}\right) + b sinh \left({bS}_{p}{thickness}_{p}\right)}$ where *Sₚ, a,* and *b* are calculated as described above, and factoring in the thickness parameter value *thicknessₚ* that describes foundation thickness based on the value of the product application thickness parameter (pt) 11-1a. For example, the thickness parameter may be estimated as: ${thickness}_{p} = {p}_{t} ∗ \left(1.0+{C}_{μ}\left(x\right)\right)$ where *C_{µ}*(*x*) is the inverted arithmetic mean of the pixel value as defined above.

At step S5-7, the appearance modifier 21 determines, for each skin-coloured pixel in the source image, the respective colour values 613 of the skin pixel when captured under bright lighting conditions, and when captured under dark lighting conditions. As those skilled in the art will appreciate, the appearance modifier 21 may process each pixel of the modified image 413, including pixels that are not skin-coloured. Alternatively, the appearance modifier 21 may be configured to process detected skin pixels in the source image, for example using the skin region binary mask data from step S2-7. For example, using the skin pixel values in the modified image 413 as the skin colour as captured under bright lighting conditions (RGB_{s_bright}) 613a, the colour of the captured skin pixels under dark lighting conditions (RGB_{s_dark}) 613b may be estimated from corresponding pixels x in the modified image data *RGBₛ* 413, as: ${RGB}_{s _ dark} \left(x\right) = 0.5 {RGB}_{s} \left(x\right)$

At step S5-9, the appearance modifier 21 computes the absorption coefficients (Kₛ) 615 and scattering coefficients (Sₛ) 617 of skin pixels in the modified image 413, based on the determined skin colours as captured under light and dark lighting conditions 613a,b from step S5-7. The skin absorption coefficients 615 and scattering coefficients 617 represent optical characteristics of the skin layer in the source image. In the present example implementation, the skin absorption coefficients (Sₛ) 615 and scattering coefficients (Sₛ) 617 are calculated, based for example on the Curtis-Anderson approximation, as: ${S}_{s} = \frac{1}{b} {coth}^{- 1} \left(\frac{{b}^{2} - \left(a-{RGB}_{s _ bright}\right) \left(a-1\right)}{b \left(1-{RGB}_{s _ bright}\right)}\right)$ and ${K}_{s} = {S}_{s} \left(a-1\right) ,$ where $a = \frac{1}{2} \left({RGB}_{s _ light}+\frac{{RGB}_{s _ dark} - {RGB}_{s _ bright} + 1}{{RGB}_{s _ dark}}\right) , b = \sqrt{{a}^{2} - 1}$ As those skilled in the art will appreciate, the layer of skin absorption coefficients 615 and scattering coefficients 617 may also be computed as multichannel values in the working colour space, such as red, green and blue values.

At step S5-11, the appearance modifier 21 computes the reflectance coefficient (Rₛ) 619 and transmittance coefficient (Tₛ) 621 of the layer of skin captured in the modified image 413, based on the skin absorption coefficients (Kₛ) 615 and scattering coefficients (Sₛ) 617 from step S5-9. In the present embodiment, an estimated thickness of the skin layer is determined based on the value of the product application thickness parameter (pt) 11-1a. In the present example implementation, the layer of skin reflectance coefficients 619 and transmittance coefficients 621 are calculated, based for example on the Curtis-Andersen approximation, as: ${R}_{p} = \frac{sinh {bS}_{p} {thickness}_{s}}{a sinh \left({bS}_{s}{thickness}_{s}\right) + b sinh \left({bS}_{s}{thickness}_{s}\right)}$ ${T}_{p} = \frac{b}{a sinh \left({bS}_{s}{thickness}_{s}\right) + b sinh \left({bS}_{s}{thickness}_{s}\right)}$ where *Sₛ, a,* and *b* are calculated as described above, and *thicknessₛ* is a thickness parameter value that describes estimated skin thickness taking into account the product application thickness parameter (pt) 11-1a. For example, the skin thickness parameter may be estimated as: ${thickness}_{s} = 2 - {p}_{t} ∗ 1.5$

After the foundation product colour and the captured skin colour components have been optically decomposed into respective layers of K-M coefficients, the appearance modifier 21 renders an output augmented version of the source image that simulates the appearance of the selected foundation product applied as a layer over the captured skin pixels. Accordingly, at step S5-13, the appearance modifier 21 computes reflectance coefficients (Rₛ₊ₚ) 623 and transmittance coefficients (Tₛ₊ₚ) 625 of a composite foundation and skin layer. The composite reflectance coefficients (Rₛ₊ₚ) 623 are computed by combining the foundation product reflectance coefficients (Rₚ) 609 from step S5-5, and the skin reflectance coefficients (Rₛ) 619 from step S5-11. The composite transmittance coefficients (Rₛ₊ₚ) 625 are computed by combining the foundation product transmittance coefficients (Tₚ) 611 from step S5-5, and the skin transmittance coefficients (Tₛ) 621 from step S5-11.

In the present example implementation, the composite reflectance and transmittance coefficients 623,625 are calculated, based for example on the Kubelka-Munk optical compositing model, as: ${R}_{C} = {R}_{s} + \frac{{{T}_{s}}^{2} {R}_{p}}{1 - {R}_{s} {R}_{p}}$ and ${T}_{C} = \frac{{T}_{s} {T}_{p}}{1 - {R}_{s} {R}_{p}}$

At step S5-15, the appearance modifier 21 generates recomposed image data 627 based on the composite reflectance coefficients (Rₛ₊ₚ) 623 and the composite transmittance coefficients (Tₛ₊ₚ) 625 from step S5-13. For example, each pixel of the recomposed image RGB₀ 627 may be computed from the corresponding coefficient components as: ${RGB}_{O} \left(x\right) = {R}_{s + p} \left(x\right) + {T}_{s + p} \left(x\right)$ In the present example implementation, the appearance modifier 21 then generates output augmented image 629 at step S5-17, by combining the modified skin pixels from the recomposed image 627 and the non-skin pixels from the original captured image 631. For example, the appearance modifier 21 may render an augmented version 629 of the original captured image 631 by replacing identified skin pixels with the corresponding modified pixel values from the recomposed image 629. The appearance modifier 21 may use the skin region binary mask data 633 from step S2-7 to determine the region(s) of pixels in the source image to be replaced.

Returning again to Figure 2, at step S2-13, the augmentation module 3 may be used to apply further image colourisation to the captured image data by modifies pixel values of the face image based on colourisation parameters 11-2 corresponding to one or more additional selected makeup products, for example retrieved from the memory 13. For example, the augmentation module 3 may be configured to apply the one or more additional layers of simulated makeup product using respective additional makeup augmentation sub-modules 9 (also referred to as shader modules) as described in the applicant's earlier WO2015/015173. Alternatively or additionally, each additional makeup augmentation sub-module 9 may be configured to apply further augmentation to input image data using various methods known in the art.

The resulting augmented image with the applied virtual makeup colourisation is output at step S2-15 for example on display 17. At step S2-17, the tracking module 3 determines if there is a new captured image frame to process and processing returns to step S2-3 where image data of the next captured frame is received from the camera 5.

### Computer Systems

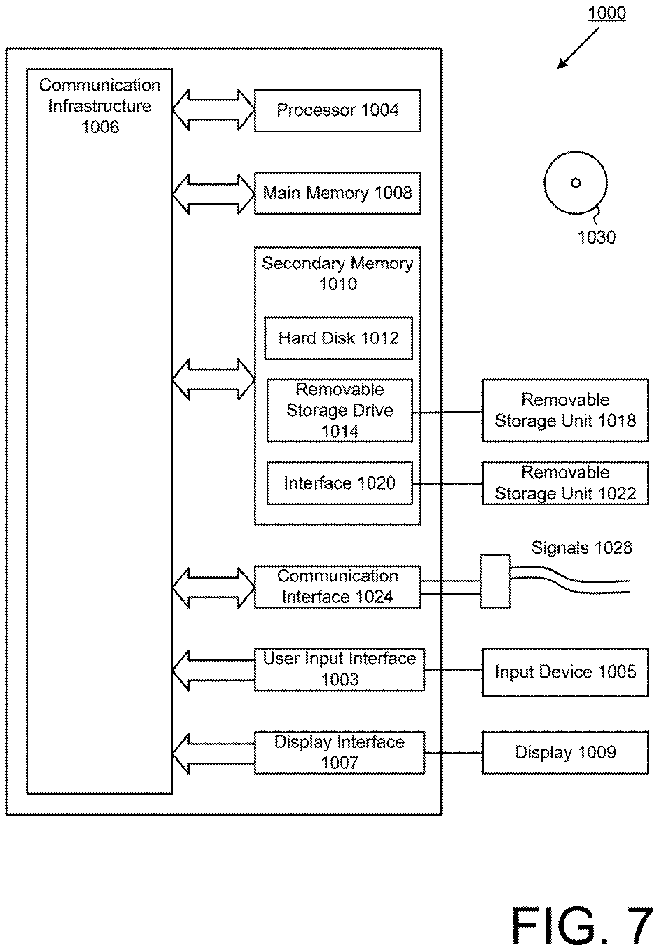

The modules described herein, such as the tracking and augmentation modules, may be implemented by a computer system or systems, such as computer system 700 as shown in Figure 7. Embodiments of the present invention may be implemented as programmable code for execution by such computer systems 700. After reading this description, it will become apparent to a person skilled in the art how to implement the invention using other computer systems and/or computer architectures.

Computer system 700 includes one or more processors, shown as processor architecture 704. Processor architecture 704 may include any type of processor, including but not limited to one or more general-purpose digital signal processor (for example, single or multiple core Central Processing Units, CPUs) and/or special purpose processors (for example, one or more Graphics Processing Units, GPUs). For example, the augmentation module 3 may be configured to implement instructions executable by the parallel processing architecture of a plurality of GPUs. Processor architecture 704 is connected to a communication infrastructure 706 (for example, a bus or network). Various software implementations are described in terms of this exemplary computer system. After reading this description, it will become apparent to a person skilled in the art how to implement the invention using other computer systems and/or computer architectures.

Computer system 700 also includes a user input interface 703 connected to one or more input device(s) 705 and a display interface 707 connected to one or more display(s) 709. Input devices 705 may include, for example, a pointing device such as a mouse or touchpad, a keyboard, a touchscreen such as a resistive or capacitive touchscreen, etc. After reading this description, it will become apparent to a person skilled in the art how to implement the invention using other computer systems and/or computer architectures, for example using mobile electronic devices with integrated input and display components.

Computer system 700 also includes a main memory 708, preferably random access memory (RAM), and may also include a secondary memory 710. Secondary memory 710 may include, for example, a hard disk drive 712 and/or a removable storage drive 714, representing a floppy disk drive, a magnetic tape drive, an optical disk drive, etc. Removable storage drive 714 reads from and/or writes to a removable storage unit 718 in a well-known manner. Removable storage unit 718 represents a floppy disk, magnetic tape, optical disk, etc., which is read by and written to by removable storage drive 714. As will be appreciated, removable storage unit 718 includes a computer usable storage medium having stored therein computer software and/or data.

In alternative implementations, secondary memory 710 may include other similar means for allowing computer programs or other instructions to be loaded into computer system 700. Such means may include, for example, a removable storage unit 722 and an interface 720. Examples of such means may include a program cartridge and cartridge interface (such as that previously found in video game devices), a removable memory chip (such as an EPROM, or PROM, or flash memory) and associated socket, and other removable storage units 722 and interfaces 720 which allow software and data to be transferred from removable storage unit 722 to computer system 700. Alternatively, the program may be executed and/or the data accessed from the removable storage unit 722, using the processor 704 of the computer system 700.

Computer system 700 may also include a communication interface 724. Communication interface 724 allows software and data to be transferred between computer system 700 and external devices. Examples of communication interface 724 may include a modem, a network interface (such as an Ethernet card), a communication port, a Personal Computer Memory Card International Association (PCMCIA) slot and card, etc. Software and data transferred via communication interface 724 are in the form of signals 728, which may be electronic, electromagnetic, optical, or other signals capable of being received by communication interface 724. These signals 728 are provided to communication interface 724 via a communication path 726. Communication path 726 carries signals 728 and may be implemented using wire or cable, fibre optics, a phone line, a wireless link, a cellular phone link, a radio frequency link, or any other suitable communication channel. For instance, communication path 726 may be implemented using a combination of channels.

The terms "computer program medium" and "computer usable medium" are used generally to refer to media such as removable storage drive 714, a hard disk installed in hard disk drive 712, and signals 728. These computer program products are means for providing software to computer system 700. However, these terms may also include signals (such as electrical, optical or electromagnetic signals) that embody the computer program disclosed herein.

Computer programs (also called computer control logic) are stored in main memory 708 and/or secondary memory 710. Computer programs may also be received via communication interface 724. Such computer programs, when executed, enable computer system 700 to implement embodiments of the present invention as discussed herein. Accordingly, such computer programs represent controllers of computer system 700. Where the embodiment is implemented using software, the software may be stored in a computer program product 730 and loaded into computer system 700 using removable storage drive 714, hard disk drive 712, or communication interface 724, to provide some examples.

Alternative embodiments may be implemented as control logic in hardware, firmware, or software or any combination thereof.

### Alternative Embodiments

It will be understood that embodiments of the present invention are described herein by way of example only, and that various changes and modifications may be made without departing from the scope of the invention.

For example, it will be appreciated that although the respective processes and associated processing modules are described as separate embodiments, aspects of the described embodiments can be combined to form further embodiments.

In the exemplary embodiments described above, the selected makeup products are applied as virtual makeup to image data captured by a camera and output as augmented versions on the display, in substantially real-time. As those skilled in the art will appreciate, in an alternative embodiment, the source image data may be retrieved from a memory, for example a library or database of stored facial images.

As yet another alternative, the tracking module and/or the augmentation module may be provided as one or more distributed computing modules or processing services on a remote server that is in communication with the augmented reality system via a data network. Additionally, as those skilled in the art will appreciate, the tracking module and/or the augmentation module functionality may be provided as one or more application programming interfaces (APIs) accessible by an application program executing on the augmented reality system, or as a plug-in module, extension, embedded code, etc., configured to communicate with the application program.

Further alternative embodiments may be envisaged, which nevertheless fall within the scope of the following claims.

## Claims

1. A computer-implemented method of generating augmented image data with a simulated foundation makeup effect, the method comprising:
receiving image data captured by a camera, the image data including at least one region of skin pixels;
generating, by an augmentation module, augmented image data based on augmentation parameters associated with the foundation makeup effect including one or more appearance parameters and one or more colourisation parameters, by:
generating modified image data by processing the captured image data to highlight skin detail features based on one or more of the appearance parameters;
computing optical components of the modified image data and the foundation makeup effect based on one or more of said augmentation parameters, wherein the optical components include decomposed frequency spectrum components;
wherein computing optical components comprises:
computing an estimation of one or more of said colourisation parameters as applied to a different background property;
computing an estimation of pixel values from the modified image data under a different lighting condition;
computing spectral absorption and scattering components of the estimation of one or more of said colourisation parameters and the estimation of pixel values from the modified image data;
computing spectral reflectance and transmittance components of the colourisation parameters from the spectral absorption and scattering components of the colourisation parameters and the estimation of one or more of said colourisation parameters; and
computing spectral reflectance and transmittance components of the modified image data from the spectral absorption and scattering components of the modified image data and the estimation of pixel values from the modified image data; and
combining the optical components of the foundation makeup effect and the optical components of the modified image data; and
outputting the augmented image data to a display.

2. The method of claim 1, wherein the captured image data is processed to highlight skin detail features by:
generating a detail layer by blurring the captured image data at a first granularity and computing a difference between the captured image data and the blurred image;
computing a base layer by blurring the captured image data at a second granularity that is larger than the first granularity; and
blending the detail and base layers to generate a blended layer, optionally wherein blending the detail and base layers includes, for each pixel of the blended layer, modifying a contrast property of the pixel based on one or more of the one or more appearance parameters.

3. The method of claim 2, wherein the blurring comprises applying a Gaussian blurring with the defined granularity, wherein the granularity defines a width of pixels sampled from the captured image data as input to a Gaussian blurring function and optionally wherein a scale of the granularity is computed based on the resolution of the captured image data.

4. The method of claim 2 or claim 3, wherein the detail layer is generated based on scale and/or offset values of the computed difference that control the level of highlighting.

5. The method of any one of claims 2 to 4, wherein the detail and base layers are defined by luma components of the captured image data and optionally wherein blending the detail and base layers further comprises applying a respective blend mode to increase or decrease brightness of the luma component of each base layer pixel, based on the pixel value of the corresponding blended layer pixel.

6. The method of any preceding claim, wherein generating augmented image data further comprises computing spectral reflectance and transmittance components of a composite layer of colourisation parameters over the captured image data, by combining the respective computed spectral reflectance and transmittance components of the colourisation parameters and the modified image data.

7. The method of any preceding claim, wherein said colourisation parameters comprise values defined to simulate appearance of a foundation makeup product as applied under a bright lighting condition, and wherein the estimation of said colourisation parameters comprise computed values to simulate appearance of the foundation makeup product as applied under a dark lighting condition.

8. The method of any preceding claim, wherein said modified image data comprises pixel values captured under a bright lighting condition, and wherein the estimation of pixel values from said modified image data comprise computed pixel values under a dark lighting condition.

9. The method of any preceding claim, wherein the appearance parameters include a thickness parameter defining simulated thickness of the foundation makeup effect and optionally wherein the appearance parameters further include one or more additional simulated appearance properties, including a gloss or matte property, highlight, glitter, lighting adjustment, blend colour, and alpha blend.

10. The method of any preceding claim, wherein the optical components of the foundation makeup effect are computed based on one or more of said colourisation parameters and one or more of said appearance parameters.

11. The method of any preceding claim, wherein the colourisation parameters are defined by values of a colour in a defined colour space, pixel values of a texture image, or by a mathematical model to generate an array of augmentation values.

12. The method of any preceding claim, further comprising outputting a user interface to the display, and receiving user input selection of the foundation makeup product and one or more associated appearance parameters via the user interface.

13. The method of claim 12, further comprising:
receiving user input selection of one or more additional makeup products via the user interface;
retrieving augmentation parameters associated with one or more additional makeup products; and
further augmenting the modified image data by applying colourisation to the pixel values based on the retrieved augmentation parameters of the additional makeup products.

14. A system comprising a camera, a display, and one or more processors configured to perform the steps of the method of any one of claims 1 to 13.

15. A storage medium comprising machine readable instructions stored thereon for causing a computer system to perform a method in accordance with any one of claims 1 to 13.

## Patentansprüche

1. Computerimplementiertes Verfahren zum Erzeugen von erweiterten Bilddaten mit einem simulierten Foundation Makeup Effekt, wobei das Verfahren Folgendes beinhaltet:
Empfangen von von einer Kamera erfassten Bilddaten, wobei die Bilddaten mindestens eine Region aus Hautpixeln enthalten;
Erzeugen, durch ein Erweiterungsmodul, von erweiterten Bilddaten auf der Basis von mit dem Foundation Makeup Effekt assoziierten Erweiterungsparametern einschließlich eines oder mehrerer Erscheinungsparameter sowie eines oder mehrerer Kolorierungsparameter, durch:
Erzeugen modifizierter Bilddaten durch Verarbeiten der erfassten Bilddaten, um Hautdetailmerkmale auf der Basis eines oder mehrerer der Erscheinungsparameter hervorzuheben;
Berechnen optischer Komponenten der modifizierten Bilddaten und des Foundation Makeup Effekts auf der Basis eines oder mehrerer der genannten Erweiterungsparameter, wobei die optischen Komponenten zerlegte Frequenzspektrumkomponenten umfassen;
wobei das Berechnen optischer Komponenten Folgendes beinhaltet:
Berechnen einer Schätzung eines oder mehrerer der genannten Kolorierungsparameter, wie sie auf eine andere Hintergrundeigenschaft angewendet werden;
Berechnen einer Schätzung von Pixelwerten aus den modifizierten Bilddaten unter einer anderen Beleuchtungsbedingung;
Berechnen spektraler Absorptions- und Streukomponenten der Schätzung eines oder mehrerer der genannten Kolorierungsparameter und der Schätzung von Pixelwerten aus den modifizierten Bilddaten;
Berechnen spektraler Reflexions- und Transmissionskomponenten der Kolorierungsparameter aus den spektralen Absorptions- und Streukomponenten der Kolorierungsparameter und der Schätzung eines oder mehrerer der genannten Kolorierungsparameter; und
Berechnen spektraler Reflexions- und Transmissionskomponenten der modifizierten Bilddaten aus den spektralen Absorptions- und Streukomponenten der modifizierten Bilddaten und der Schätzung von Pixelwerten aus den modifizierten Bilddaten; und
Kombinieren der optischen Komponenten des Foundation Makeup Effekts und der optischen Komponenten der modifizierten Bilddaten; und Ausgeben der erweiterten Bilddaten an ein Display.

2. Verfahren nach Anspruch 1, wobei die erfassten Bilddaten zum Hervorheben von Hautdetailmerkmalen verarbeitet werden durch:
Erzeugen einer Detailschicht durch Weichzeichnen der erfassten Bilddaten mit einer ersten Granularität und Berechnen einer Differenz zwischen den erfassten Bilddaten und dem weichgezeichneten Bild;
Berechnen einer Basisschicht durch Weichzeichnen der erfassten Bilddaten mit einer zweiten Granularität, die größer ist als die erste Granularität; und
Mischen der Detail- und Basisschicht zum Erzeugen einer Mischschicht, wobei das Mischen der Detail- und Basisschicht optional für jedes Pixel der Mischschicht das Modifizieren einer Kontrasteigenschaft des Pixels auf der Basis eines oder mehrerer der ein oder mehreren Erscheinungsparameter beinhaltet.

3. Verfahren nach Anspruch 2, wobei das Weichzeichnen das Anwenden einer Gaußschen Weichzeichnung mit der definierten Granularität beinhaltet, wobei die Granularität eine Breite von aus den erfassten Bilddaten abgetasteten Pixeln als Eingabe in eine Gaußsche Weichzeichnungsfunktion definiert, und wobei optional eine Skala der Granularität auf der Basis der Auflösung der erfassten Bilddaten berechnet wird.

4. Verfahren nach Anspruch 2 oder Anspruch 3, wobei die Detailschicht auf der Basis von Skalen- und/oder Versatzwerten der berechneten Differenz erzeugt wird, die den Grad an Hervorhebung steuern.

5. Verfahren nach einem der Ansprüche 2 bis 4, wobei die Detail- und Basisschicht durch Luma-Komponenten der erfassten Bilddaten definiert sind und wobei das Mischen der Detail- und Basisschicht optional ferner das Anwenden eines jeweiligen Mischmodus umfasst, um die Helligkeit der Luma-Komponente jedes Basisschichtpixels auf der Basis des Pixelwerts des entsprechenden Mischschichtpixels zu erhöhen oder zu verringern.

6. Verfahren nach einem vorherigen Anspruch, wobei das Erzeugen von erweiterten Bilddaten ferner das Berechnen von spektralen Reflexions- und Transmissionskomponenten einer Verbundschicht aus Kolorierungsparametern über die erfassten Bilddaten durch Kombinieren der jeweiligen berechneten spektralen Reflexions- und Transmissionskomponenten der Kolorierungsparameter und der modifizierten Bilddaten beinhaltet.

7. Verfahren nach einem vorherigen Anspruch, wobei die genannten Kolorierungsparameter zum Simulieren des Erscheinungsbildes eines Foundation Makeup Produkts bei Anwendung unter einer hellen Beleuchtungsbedingung definierte Werte umfassen, und wobei das Schätzen der genannten Kolorierungsparameter berechnete Werte umfasst, um das Erscheinungsbild des Foundation Makeup Produkts bei Anwendung unter einer dunklen Beleuchtungsbedingung zu simulieren.

8. Verfahren nach einem vorherigen Anspruch, wobei die genannten modifizierten Bilddaten unter einer hellen Beleuchtungsbedingung erfasste Pixelwerte umfassen, und wobei das Schätzen von Pixelwerten aus den genannten modifizierten Bilddaten berechnete Pixelwerte unter einer dunklen Beleuchtungsbedingung beinhaltet.

9. Verfahren nach einem vorherigen Anspruch, wobei die Erscheinungsparameter einen Dickenparameter umfassen, der die simulierte Dicke des Foundation Makeup Effekts definiert, und wobei die Erscheinungsparameter optional ferner eine oder mehrere zusätzliche simulierte Erscheinungseigenschaften einschließlich einer Glanz- oder Matteigenschaft, Highlights, Glitzer, Beleuchtungsjustierung, Mischfarbe und Alpha-Mischung umfassen.

10. Verfahren nach einem vorherigen Anspruch, wobei die optischen Komponenten des Foundation Makeup Effekts auf der Basis eines oder mehrerer der genannten Kolorierungsparameter und eines oder mehrerer der Erscheinungsparameter berechnet werden.

11. Verfahren nach einem vorherigen Anspruch, wobei die Kolorierungsparameter durch Werte einer Farbe in einem definierten Farbraum, durch Pixelwerte eines Texturbildes oder durch ein mathematisches Modell definiert werden, um ein Array von Erweiterungswerten zu erzeugen.

12. Verfahren nach einem vorherigen Anspruch, das ferner das Ausgeben einer Benutzeroberfläche an das Display und das Empfangen einer durch den Benutzer über die Benutzeroberfläche getroffenen Auswahl des Foundation Makeup Produkts sowie eines oder mehrerer assoziierter Erscheinungsparameter beinhaltet.

13. Verfahren nach Anspruch 12, das ferner Folgendes beinhaltet:
Empfangen einer durch den Benutzer über die Benutzeroberfläche getroffenen Auswahl eines oder mehrerer zusätzlicher Make-up-Produkte;
Abrufen von mit einem oder mehreren zusätzlichen Make-up-Produkten assoziierten Erweiterungsparametern; und
weiteres Erweitern der modifizierten Bilddaten durch Anwenden von Kolorierung auf die Pixelwerte auf der Basis der abgerufenen Erweiterungsparameter der zusätzlichen Make-up-Produkte.

14. System, das eine Kamera, ein Display und einen oder mehrere Prozessoren umfasst, die zum Durchführen der Schritte des Verfahrens nach einem der Ansprüche 1 bis 13 konfiguriert sind.

15. Speichermedium, auf dem maschinenlesbare Befehle gespeichert sind, um ein Computersystem zum Durchführen eines Verfahrens nach einem der Ansprüche 1 bis 13 zu veranlassen.

## Revendications

1. Procédé mis en œuvre par ordinateur de génération de données d'image augmentées avec un effet de maquillage de fond de teint simulé, le procédé comprenant les étapes consistant à :
recevoir des données d'image capturées par une caméra, les données d'image comprenant au moins une région de pixels de peau ;
générer, par un module d'augmentation, des données d'image augmentées sur la base de paramètres d'augmentation associés à l'effet de maquillage de fond de teint comprenant un ou plusieurs paramètres d'apparence et un ou plusieurs paramètres de colorisation, en réalisant les étapes consistant à :
générer des données d'image modifiées en traitant les données d'image capturées pour accentuer des caractéristiques de détail de peau sur la base d'un ou plusieurs des paramètres d'apparence ;
calculer des composantes optiques des données d'image modifiées et de l'effet de maquillage de fond de teint sur la base d'un ou plusieurs desdits paramètres d'augmentation, les composantes optiques comprenant des composantes spectrales fréquentielles décomposées ;
le calcul de composantes optiques comprenant les étapes consistant à :
calculer une estimation d'un ou plusieurs desdits paramètres de colorisation tels qu'ils sont appliqués à une propriété d'arrière-plan différente ;
calculer une estimation de valeurs de pixel à partir des données d'image modifiées sous une condition d'éclairage différente ;
calculer des composantes d'absorption et de diffusion spectrales de l'estimation d'un ou plusieurs desdits paramètres de colorisation et de l'estimation de valeurs de pixel à partir des données d'image modifiées ;
calculer des composantes de facteur de réflexion et de facteur de transmission spectraux des paramètres de colorisation à partir des composantes d'absorption et de diffusion spectrales des paramètres de colorisation et de l'estimation d'un ou plusieurs desdits paramètres de colorisation ; et
calculer des composantes de facteur de réflexion et de facteur de transmission spectraux des données d'image modifiées à partir des composantes d'absorption et de diffusion spectrales des données d'image modifiées et de l'estimation de valeurs de pixel à partir des données d'image modifiées ; et
combiner les composantes optiques de l'effet de maquillage de fond de teint et les composantes optiques des données d'image modifiées ; et
délivrer en sortie les données d'image augmentées à une unité d'affichage.

2. Procédé selon la revendication 1, les données d'image capturées étant traitées pour accentuer des caractéristiques de détail de peau en réalisant les étapes consistant à :
générer une couche de détail en floutant les données d'image capturées à une première granularité et en calculant une différence entre les données d'image capturées et l'image floutée ;
calculer une couche de base en floutant les données d'image capturées à une seconde granularité qui est supérieure à la première granularité ; et
mélanger les couches de détail et de base pour générer une couche mélangée, le mélange des couches de détail et de base comprenant éventuellement, pour chaque pixel de la couche mélangée, l'étape consistant à modifier une propriété de contraste du pixel sur la base d'un ou plusieurs des un ou plusieurs paramètres d'apparence.

3. Procédé selon la revendication 2, le floutage comprenant l'étape consistant à appliquer un floutage gaussien avec la granularité définie, la granularité définissant une largeur de pixels échantillonnés à partir des données d'image capturées en guise d'entrée pour une fonction de floutage gaussien, et une échelle de la granularité étant éventuellement calculée sur la base de la résolution des données d'image capturées.

4. Procédé selon la revendication 2 ou 3, la couche de détail étant générée sur la base de valeurs d'échelle et/ou de décalage de la différence calculée qui commandent le niveau d'accentuation.

5. Procédé selon l'une quelconque des revendications 2 à 4, les couches de détail et de base étant définies par des composantes de luminance des données d'image capturées, et le mélange des couches de détail et de base comprenant éventuellement en outre l'étape consistant à appliquer un mode de mélange respectif pour augmenter ou diminuer la luminosité de la composante de luminance de chaque pixel de couche de base, sur la base de la valeur de pixel du pixel de couche mélangée correspondant.

6. Procédé selon l'une quelconque des revendications précédentes, la génération de données d'image augmentées comprenant en outre l'étape consistant à calculer des composantes de facteur de réflexion et de facteur de transmission spectraux d'une couche composite de paramètres de colorisation sur les données d'image capturées, en combinant les composantes de facteur de réflexion et de facteur de transmission spectraux calculées respectives des paramètres de colorisation et des données d'image modifiées.

7. Procédé selon l'une quelconque des revendications précédentes, lesdits paramètres de colorisation comprenant des valeurs définies pour simuler l'apparence d'un produit de maquillage de fond de teint tel qu'il est appliqué sous une condition d'éclairage lumineuse, et l'estimation desdits paramètres de colorisation comprenant des valeurs calculées pour simuler l'apparence du produit de maquillage de fond de teint tel qu'il est appliqué sous une condition d'éclairage sombre.

8. Procédé selon l'une quelconque des revendications précédentes, lesdites données d'image modifiées comprenant des valeurs de pixel capturées sous une condition d'éclairage lumineuse, et l'estimation de valeurs de pixel à partir desdites données d'image modifiées comprenant des valeurs de pixel calculées sous une condition d'éclairage sombre.

9. Procédé selon l'une quelconque des revendications précédentes, les paramètres d'apparence comprenant un paramètre d'épaisseur définissant une épaisseur simulée de l'effet de maquillage de fond de teint, et les paramètres d'apparence comprenant éventuellement en outre une ou plusieurs propriétés d'apparence simulées supplémentaires, comprenant une propriété brillante ou mate, une accentuation, des paillettes, un réglage de d'éclairage, une couleur de mélange et un mélange alpha.

10. Procédé selon l'une quelconque des revendications précédentes, les composantes optiques de l'effet de maquillage de fond de teint étant calculées sur la base d'un ou plusieurs desdits paramètres de colorisation et d'un ou plusieurs desdits paramètres d'apparence.

11. Procédé selon l'une quelconque des revendications précédentes, les paramètres de colorisation étant définis par des valeurs d'une couleur dans un espace chromatique défini, par des valeurs de pixel d'une image de texture ou par un modèle mathématique pour générer un réseau de valeurs d'augmentation.

12. Procédé selon l'une quelconque des revendications précédentes, comprenant en outre les étapes consistant à délivrer en sortie une interface d'utilisateur à l'unité d'affichage, et à recevoir une sélection d'entrée d'utilisateur du produit de maquillage de fond de teint et d'un ou plusieurs paramètres d'apparence associés par l'intermédiaire de l'interface d'utilisateur.

13. Procédé selon la revendication 12, comprenant en outre les étapes consistant à :
recevoir une sélection d'entrée d'utilisateur d'un ou plusieurs produits de maquillage supplémentaires par l'intermédiaire de l'interface d'utilisateur ;
récupérer des paramètres d'augmentation associés à un ou plusieurs produits de maquillage supplémentaires ; et
augmenter davantage les données d'image modifiées en appliquant une colorisation aux valeurs de pixel sur la base des paramètres d'augmentation récupérés des produits de maquillage supplémentaires.

14. Système comprenant une caméra, une unité d'affichage et un ou plusieurs processeurs configurés pour réaliser les étapes du procédé selon l'une quelconque des revendications 1 à 13.

15. Support de stockage sur lequel sont stockées des instructions lisibles par machine pour amener un système informatique à réaliser un procédé selon l'une quelconque des revendications 1 à 13.
